# EUROPEAN PATENT APPLICATION

(11) **EP 3 952 047 A1**
(43) Date of publication of application: **09.02.2022**
(21) Application number: 20928655.8
(22) Date of filing: 12.06.2020
(51) Int. Cl.: H02J 3/38

(54) **POWER TRANSMISSION SYSTEM AND POWER SUPPLY APPARATUS THEREOF**

(30) Priority: 01.04.2020 CN 202010248595
(71) Applicant: GUANGDONG UNLIMITED POWER CO., LTD., Torch Development Zone Zhongshan City Guangdong 528404 (CN)
(72) Inventor: PENG, Guoping, Zhongshan, Guangdong 528404 (CN); WANG, Hongzhan, Zhongshan, Guangdong 528404 (CN); ZHOU, Zhiguo, Zhongshan, Guangdong 528404 (CN); SHI, Ben, Zhongshan, Guangdong 528404 (CN); LIU, Huimin, Zhongshan, Guangdong 528404 (CN); XU, Yuanlong, Zhongshan, Guangdong 528404 (CN); BAI, Daibing, Zhongshan, Guangdong 528404 (CN)
(74) Representative: Westphal, Mussgnug & Partner, Patentanwälte mbB
(86) International application number: PCT/CN2020/095827
(87) International publication number: WO 2021/196406

(57) **Abstract**

A power supply device of a power transmission system is provided. By using a converting station energy storage device for standby power supply, a control system of a converting station can be ensured to run normally under a condition of black start of a power generation field, and by using a power generation and energy storage device for standby power supply, a power generation device of the power generation field can be ensured to implement black start without an external auxiliary power supply after failure shutdown, and finally implement black start in the whole power transmission system. In addition, after completing black start, the converting station energy storage device and the power generation and energy storage device are capable of acquiring electricity from the power generation field and the power generation device for charging. Finally, at the beginning of black start of the power generation field and the power generation device, a hybrid power supply method is adopted to supply power, and the converting station energy storage device and the power generation and energy storage device are stopped supplying power after the power generation field and the power generation device run normally, thus ensuring a stability and a safety during black start of the power transmission system.

## Description

### TECHNICAL FIELD

The present invention relates to the field of long-distance power transmission, and more particularly, to a power transmission system and a power supply device thereof.

### BACKGROUND

With the development of an offshore wind power industry, arranging a power generation field offshore and generating power through a power generation device arranged in the power generation field has been applied more widely, but most power transmission systems have a higher cost, and exploring a novel low-cost and high-reliability offshore wind power direct current grid connection scheme has become an urgent task for industrial development. Although flexible direct current transmission has advantages of a small occupied area and a small volume compared with traditional direct current transmission, the flexible direct current transmission is still unable to be fully applied to large-scale and long-distance offshore wind power grid connection.

Currently, a conversion method of a diode uncontrolled rectifier instead of a controllable rectifier has been studied at home and abroad. Compared with fully controlled rectification used in a flexible direct current, diode rectification is able to further reduce a volume and a cost of a device, thus being very suitable for a rectifier end of an offshore power generation field. However, due to a unidirectional transmission characteristic of diode rectification, the converting station can only transmit electricity from an alternating current input end to a direct current output end, and when the power generation field has not started running, it is necessary to provide auxiliary power supply from the outside to provide initial power supply for the power generation field. The auxiliary power supply also provides station power supply for the converting station at the same time. However, in some remote regions, such as sea and desert, it is difficult to connect to the auxiliary power supply from the outside.

The technical term "black start" refers to a process of driving a device without a self-turn-on ability through a device with the self-turn-on ability in a system without the help of other systems after power cut of the whole system and gradually recovering the whole system.

### SUMMARY

The present invention aims to address at least one of the technical problems in the prior art. Therefore, the present invention provides a power supply device of a power transmission system, and the power supply device of the power transmission system has a simple structure, and solves a problem of incapability of black start due to no external auxiliary power supply. The present invention further provides a power transmission system.

A power supply device of a power transmission system according to an embodiment in a first aspect of the present invention includes: a converting station energy storage device arranged in a converting station, and configured for supplying power to a control system of the converting station in case of power cut or failure of a power generation field; a first data collection module configured for collecting a bus voltage and a running status of the converting station energy storage device; a first main control panel respectively connected with the converting station energy storage device and the first data collection module, and configured for receiving data collected by the first data collection module and controlling start and stop of the converting station energy storage device; a power generation and energy storage device arranged in the power generation field, and configured for supplying power to a control system of a power generation device in case of power cut or failure of the power generation device; a second data collection module configured for collecting a working status, a maintenance status and an output power of the power generation device; and a second main control panel respectively connected with the power generation and energy storage device and the second data collection module, and configured for receiving data collected by the second data collection module and controlling start and stop of the power generation and energy storage device.

The power supply device according to the embodiment of the present invention at least has the following technical effects: the converting station energy storage device ensures that the control system of the converting station can continue to work under a condition of power loss of the power generation field, and the power generation and energy storage device ensures that after the power generation device is stopped or failed, the control system of the power generation device can continue to work and implement black start. The bus voltage and the working status of the converting station energy storage device are collected in real time through the first data collection module, and the converting station energy storage device is automatically controlled by combining with the first main control panel. The working status, the maintenance status and the output power of the power generation device are collected in real time through the second data collection module, and the power generation and energy storage device is automatically controlled through the second main control panel. Finally, a black start process is gradually completed without an external auxiliary power supply. In addition, the converting station energy storage device and the power generation and energy storage device may be charged when the power supply device works normally through control of the first main control panel and the second main control panel to ensure that longest standby power supply time can be reached in subsequent use.

According to some embodiments of the present invention, the converting station energy storage device includes a first power storage module configured as a standby power supply for supplying power to the control system of the converting station; and a first charge-discharge converter with an input end connected with an output end of the first power storage module, and an output end configured for connecting a low voltage side of a station transformer of the converting station.

According to some embodiments of the present invention, one or more of a storage battery, a flywheel, a super capacitor, a fuel battery and an all-vanadium redox-flow battery is employed as the first power storage module.

According to some embodiments of the present invention, the converting station energy storage device further includes a first diesel generator set, and an output end of the first diesel generator set is connected with the low voltage side of the station transformer of the converting station.

According to some embodiments of the present invention, the power supply device above further includes a photovoltaic power generator set, wherein an output end of the photovoltaic power generator set is connected with the converting station energy storage device.

According to some embodiments of the present invention, the power generation and energy storage device includes a second power storage module configured as a standby power supply for supplying power to the control system of the power generation device in case of power cut or failure of the power generation device; and a second charge-discharge converter with an input end connected with an output end of the second power storage module, and an output end configured for connecting a low voltage side of an output transformer of the power generation device or a bus of a wind power converter of the power generation device.

According to some embodiments of the present invention, one or more of a storage battery, a flywheel, a super capacitor, a fuel battery and an all-vanadium redox-flow battery is employed as the second power storage module.

According to some embodiments of the present invention, the power generation and energy storage device further includes a boosting transformer, an input end of the boosting transformer is connected with the output end of the second charge-discharge converter, and the output end is connected with a high voltage side of an output transformer of the power generation device.

According to some embodiments of the present invention, the power generation and energy storage device further includes a second diesel generator set, and an output end of the second diesel generator set is connected with a low voltage side of an output transformer of the power generation device.

An offshore flexible power transmission system according to an embodiment in a second aspect of the present invention includes a power generation field, a converting station and an onshore converting platform which are connected in sequence, and the power supply device above which is respectively connected with the converting station and the power generation field.

The offshore flexible power transmission system according to the embodiment of the present invention at least has the following technical effects: the converting station and an external power generation field can implement self-starting without the external auxiliary power supply by adding the power supply device above, thus solving a problem of incapability of self-starting when the external auxiliary power supply cannot be externally connected in remote areas. Meanwhile, the converting station and the power generation field can be controlled in case of power loss of the power generation field by adding the power supply device above, without losing communication with the onshore converting platform.

Part of the additional aspects and advantages of the present invention will be given in part in the following description, and will become apparent in part from the following description, or will be learned through the practice of the present invention.

### BRIEF DESCRIPTION OF THE DRAWINGS

The above and/or additional aspects and advantages of the present invention will be apparent and easily understood from the description of the embodiments with reference to the following accompanying drawings, wherein:
FIG. 1 is a schematic diagram of a structure of a power transmission system according to an embodiment in a second aspect of the present invention;
FIG. 2 is a schematic diagram of a structure of a converting station according to an embodiment in a first aspect of the present invention;
FIG. 3 is a schematic diagram of a structure of a converting station energy storage device according to the embodiment in the first aspect of the present invention;
FIG. 4 is a schematic diagram of a structure of a power generation and energy storage device according to the embodiment in the first aspect of the present invention;
FIG. 5 is a schematic diagram of a structure of the power generation and energy storage device according to the embodiment in the first aspect of the present invention (added with a boosting transformer);
FIG. 6 is a power supply logic diagram of the converting station energy storage device according to the embodiment in the first aspect of the present invention;
FIG. 7 is a power supply logic diagram of the power generation and energy storage device according to the embodiment in the first aspect of the present invention;
FIG. 8 is a structure block diagram of a power supply device of the converting station according to the embodiment in the first aspect of the present invention; and
FIG. 9 is a structure block diagram of a power supply device of a power generation device according to the embodiment in the first aspect of the present invention.

Reference numerals:
110 refers to converting station energy storage device, 111 refers to first power storage module, 112 refers to first charge-discharge converter, 113 refers to photovoltaic power generator set, 114 refers to first diesel generator set, 115 refers to first circuit breaker set, 120 refers to first data collection module, 130 refers to first main control panel, 140 refers to first output panel, 150 refers to man-machine interaction unit,

210 refers to power generation and energy storage device, 211 refers to second power storage module, 212 refers to second charge-discharge converter, 213 refers to boosting transformer, 214 refers to second diesel generator set, 215 refers to second circuit breaker set, 220 refers to second data collection module, 230 refers to second main control panel, and 240 refers to second output panel.

### DETAILED DESCRIPTION

The embodiments of the present invention will be described in detail hereinafter. Examples of the embodiments are shown in the accompanying drawings. The same or similar reference numerals throughout the drawings denote the same or similar elements or elements having the same or similar functions. The embodiments described below with reference to the accompanying drawings are exemplary and are only intended to explain the present invention, but should not be construed as limiting the present invention.

In the description of the present invention, if the terms "first", "second", "third", "fourth", etc. are used for the purpose of distinguishing the technical features only in the description, and cannot be understood as indicating or implying relative importance, implicitly indicating the number of technical features indicated thereby, or implicitly indicating the order of technical features indicated thereby.

In the description of the present invention, unless otherwise clearly defined, the terms "setting", "connection", etc. shall be understood broadly, and those skilled the art can reasonably determine the specific meanings of the above terms in the present invention in combination with the specific contents of the technical solution.

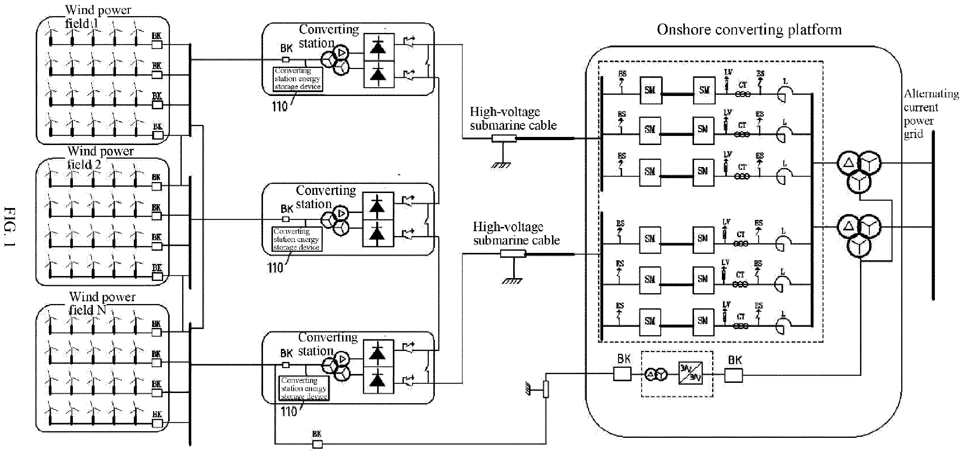

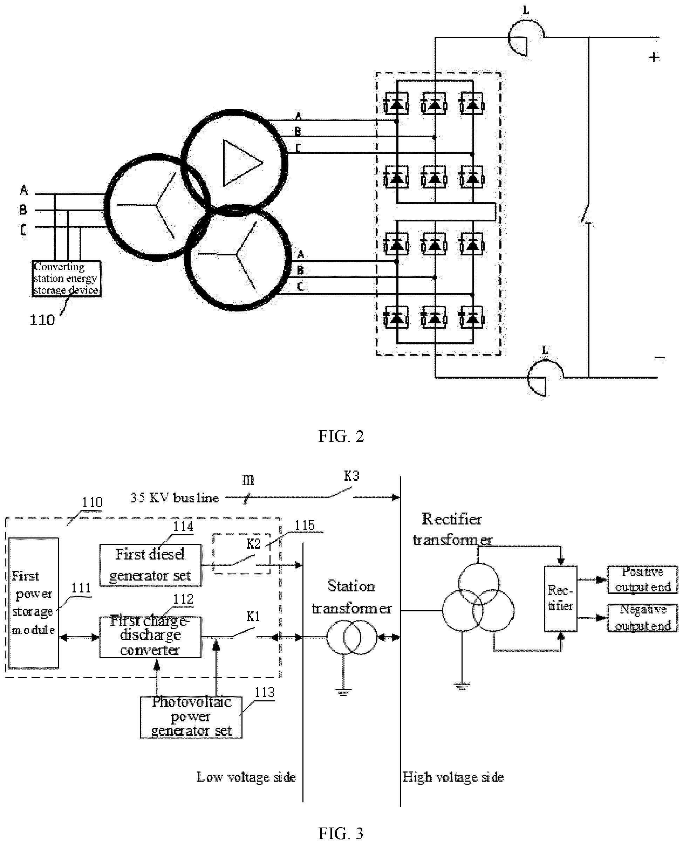

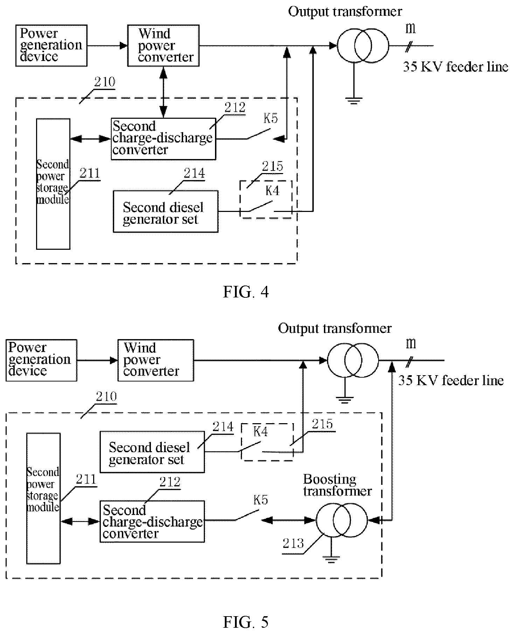

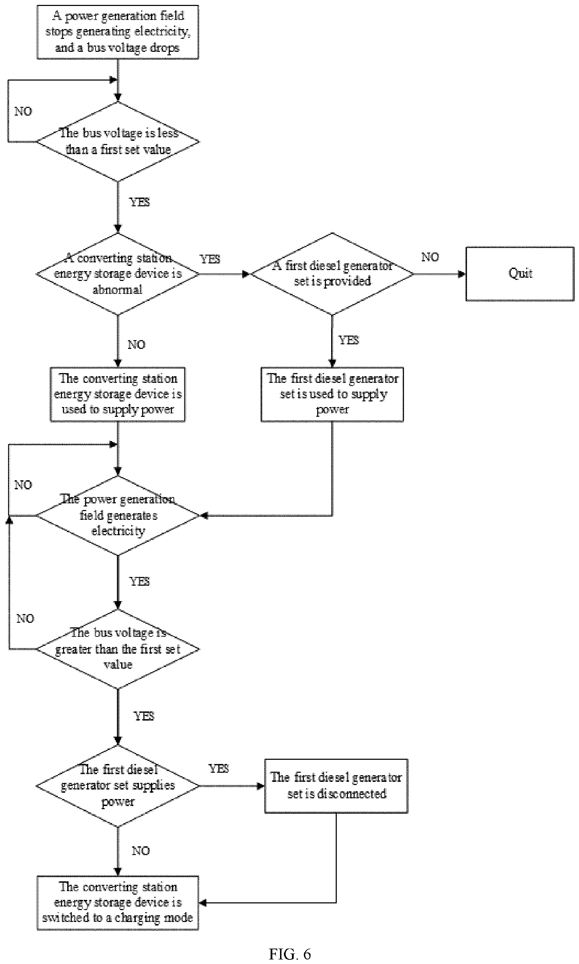

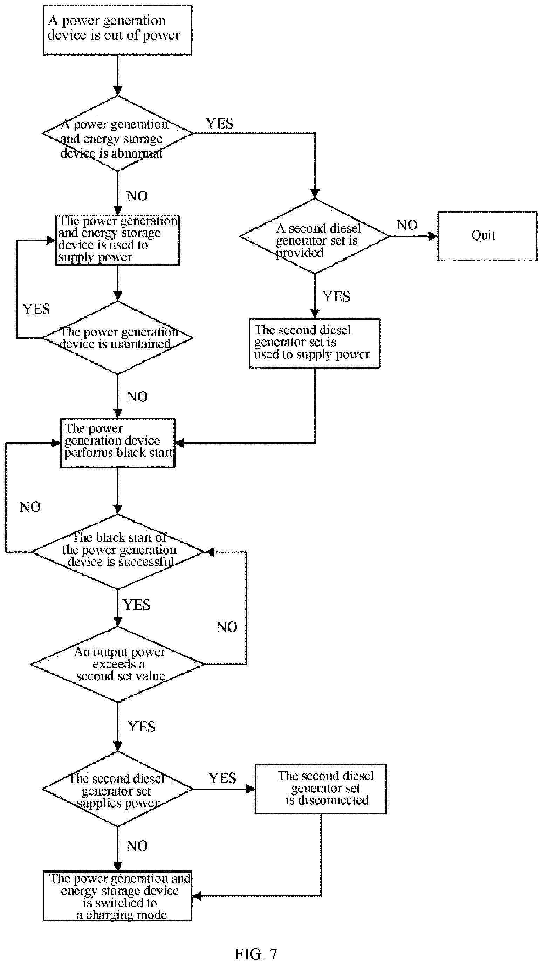

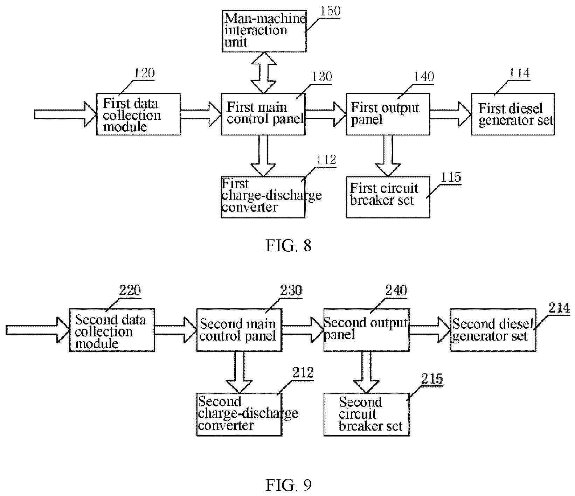

A power supply device according to an embodiment in a first aspect of the utility model is described hereinafter with reference to FIG. 1 to FIG. 9.

The power supply device according to the embodiment in the first aspect of the present invention includes: a converting station energy storage device 110, a first data collection module 120, a first main control panel 130, a power generation and energy storage device 210, a second data collection module 220, and a second main control panel 230. The converting station energy storage device 110 is arranged in a converting station, and configured for supplying power to a control system of the converting station in case of power cut or failure of a power generation field. The first data collection module 120 is configured for collecting a bus voltage and a running status of the converting station energy storage device 110. The first main control panel 130 is respectively connected with the converting station energy storage device 110 and the first data collection module 120, and configured for receiving data collected by the first data collection module 120 and controlling start and stop of the converting station energy storage device 110. The power generation and energy storage device 210 is arranged in the power generation field, and configured for supplying power to a control system of a power generation device in case of power cut or failure of the power generation device. The second data collection module 220 is configured for collecting a working status, a maintenance status and an output power of the power generation device. The second main control panel 230 is respectively connected with the power generation and energy storage device 210 and the second data collection module 220, and configured for receiving data collected by the second data collection module 220 and controlling start and stop of the power generation and energy storage device 210. The first main control panel 130 is also connected with the second main control panel 230, and configured for data interaction with the second main control panel 230.

Referring to FIG. 1 to FIG. 9, the converting station energy storage device 110 is responsible for supplying power to the control system of the converting station in case of power cut or failure of the power generation field and incapability of providing enough power by a bus. The first data collection module 120 is configured for collecting a bus voltage and a running status of the converting station energy storage device 110. Generally, a voltage sensor may be used to collect the bus voltage. For collection of the working status of the converting station energy storage device 110, whether the converting station energy storage device 110 can provide enough output may be judged by collecting a voltage of the converting station energy storage device 110. The first main control panel 130 main receives the data collected by the first data collection module 120, and analyzes and processes the collected data, is mainly configured for controlling the converting station energy storage device 110 to start and supply power when the bus voltage is too low, and is also configured for sending out alarm information when the converting station energy storage device 110 is failed at the same time.

Referring to FIG. 1 to FIG. 9, the power generation and energy storage device 210 is responsible for supplying power to the control system of the power generation device in case of power loss of the power generation device. One power generation and energy storage device 210 supplies power to one power generation device. The second data collection module 220 mainly collects a working status, a maintenance status and an output power of the power generation device. When the power generation device is in the maintenance status, the power generation and energy storage device 210 is still kept in the working status. A main purpose of collecting the working status of the power generation device is to know the working status of the power generation device. In practical engineering, the collection of the working status of the power generation device may be combined with collection of a voltage of the power generation device, because under normal conditions, in case of power cut of the power generation device, the voltage will drop or even return to zero directly, while when normal power generation is recovered, the voltage is subject to a process of rising to a normal voltage. An output power may be collected by collecting a current and a voltage. The second main control panel 230 is mainly configured for receiving information transmitted from the second data collection module 220, and simply processing the information, and is configured for controlling the power generation and energy storage device 210 to be connected. In addition, the second main control panel 230 is also configured for sending out alarm information when the power generation and energy storage device 210 cannot be started normally or is failed.

Referring to FIG. 1 to FIG. 9, a working principle of the power supply device is briefly described.

For the control system of the converting station: the bus voltage is continuously collected, and in case of power cut or failure of the power generation field, the bus voltage will drop. When the bus voltage drops to a preset first set value, the bus voltage can no longer ensure normal running of the control system of the converting station already. At the moment, the converting station energy storage device 110 may be started to supply power to an electric device in the converting station to ensure stable running of the control system of the converting station. Under normal conditions, after power cut of the power generation field, the power generation device in the power generation field may be started again, while in a process of power cut to success grid connection again of the power generation device, the converting station energy storage device 110 is required to continuously supply power to the electric device in the converting station. When the power generation device is started again and starts to supply power, since voltage rise is not a continuous process, it is necessary to continue to use the converting station energy storage device 110 to supply power after starting black start and before raising the bus voltage to the first set value. After raising the bus voltage to the first set value, the converting station energy storage device 110 will stop supplying power. Meanwhile, the bus may also be used to charge the converting station energy storage device 110 to ensure that the converting station energy storage device 110 can be kept in a best use state in next use.

For the control system of the power generation device: the working status and the output power of the power generation device are continuously collected. The power generation device may be stopped artificially due to requirements of repair and maintenance. When the power generation device is stopped, the power generation and energy storage device 210 keeps supplying power to ensure automatic running of the control system of the power generation device. When the working status is detected, it is necessary to judge whether the power generation device is in the maintenance status. When the power generation device is subject to power loss and is not in the maintenance status, the control system of the power generation device may try to perform black start on the power generation device. When the power generation device starts to perform black start but the output power is less than a second set value, the power generation device and the power generation and energy storage device 210 may be used in the control system of the power generation device at the same time to supply power, so as to prevent the power generation device from being unable to supply power to the whole control system due to a small amount of power generated at the beginning of start-up. When the power generation device runs normally and the output power is greater than the second set value, the control system of the power generation device only needs to use the power generation device to supply power. Meanwhile, the power generation device may also charge the power generation and energy storage device 210 to ensure that the power generation and energy storage device 210 is in a best status in next time. In addition, a black start function of the power generation device is also an important condition for the control system of the converting station to recover normal use.

In addition, in some embodiments of the present invention, the first main control panel 130 and the second main control panel 230 may both be processed with a single chip microcomputer, a DSP or a PLC. In the embodiment of the present invention, the single chip microcomputer is employed, specifically STM32 series are employed.

For the power supply device according to the embodiment of the present invention, the converting station energy storage device 110 ensures that the control system of the converting station can continue to work under a condition of power loss of the power generation field, and the power generation and energy storage device 210 ensures that after the power generation device is stopped, the control system of the power generation device can continue to work and implement black start. The bus voltage and the working status of the converting station energy storage device 110 are collected in real time through the first data collection module 120, and the converting station energy storage device 110 is automatically controlled by combining with the first main control panel 130. Finally, the black start process of the power generation device is gradually completed without the external auxiliary power supply. In addition, the converting station energy storage device 110 and the power generation and energy storage device 120 may be charged when the power transmission system works normally through control of the first main control panel 130 and the second main control panel 230 to ensure that longest standby power supply time can be reached in subsequent use. In addition, it should also be noted that the power supply device in the embodiment of the present invention can perfectly meet a requirement of completing the power transmission system by diode rectification of an offshore wind power field.

In some embodiments of the present invention, the first main control panel 130 is also connected with the second main control panel 230, and is configured to data interaction with the second main control panel 230. The first main control panel 130 may receive data from the second main control panel 230, so as to achieve the purpose of viewing information of the power generation field at the converting station. It should also be noted that the first main control panel 130 controls the converting station energy storage device 110 to be connected and the second main control panel 230 controls the power generation and energy storage device 210 to be connected, and this process may also be implemented through a contactor when charging through the power generation device and the power generation field subsequently. The power generation field usually includes a wind power generation field or a photovoltaic power generation field, and a wind power generator set or a photovoltaic power generation module are correspondingly employed as the power generation device.

In some embodiments of the present invention, the converting station energy storage device 110 includes a first power storage module 111 and a first charge-discharge converter 112. The first power storage module 111 is configured as a standby power supply for supplying power to the control system of the converting station when the converting station is failed. The first charge-discharge converter 112 has an input end connected with an output end of the first power storage module 111, and an output end configured for connecting a low voltage side of a station transformer of the converting station. The first power storage module 111 may provide a stable power supply to ensure that the control system of the converting station can be powered stably. However, under normal conditions, the first power storage module 111 cannot be directly connected to an alternating current. At the moment, the first charge-discharge converter 112 is required for switching to implement alternating and direct current conversion, rectification, filtering, and other operations. Finally, the first power storage module can be connected to the low voltage side of the station transformer of the converting station, and then supplied to the control system of the whole converting station.

In some embodiments of the present invention, one or more of a storage battery, a flywheel, a super capacitor, a fuel battery and an all-vanadium redox-flow battery is employed as the first power storage module 111. Under normal conditions, only one of the storage battery, the flywheel, the super capacitor, the fuel battery and the all-vanadium redox-flow battery needs to be employed, but sometimes, in order to improve a stability or meet some special requirements, more of the storage battery, the flywheel, the super capacitor, the fuel battery and the all-vanadium redox-flow battery kinds may be combined.

In some embodiments of the present invention, the power supply device above further includes a photovoltaic power generator set 113, wherein an output end of the photovoltaic power generator set 113 is connected with the converting station energy storage device 110. There are many connection modes between the photovoltaic power generator set 113 and the converting station energy storage device 110, and different connection modes may be provided according to different requirements. A direct current is directly generated by the photovoltaic power generator set 113, and may be connected to a direct current terminal after being subject to simple filtering, inversion, rectification, voltage stabilization and other measures. The photovoltaic power generator set is usually connected to an output end of the first power storage module 111 or a direct current bus of the first charge-discharge converter 112, thus supplying power by the direct current. The photovoltaic power generator set 113 may also be connected to the output end of the converting station energy storage device 110, which means that the photovoltaic power generator set is connected to the low voltage side of the station transformer of the converting station. At the moment, in an alternating current state, the direct current generated by the photovoltaic power generator set 113 also needs to be inverted by an inverter after being subject to filtering, rectification, voltage stabilization and other measures, and then is connected to an alternating current terminal. Finally, continuous supplementary power supply to the converting station energy storage device 110 is implemented to increase a service time of the converting station energy storage device 110.

In some embodiments of the present invention, the converting station energy storage device further includes a first diesel generator set 114, and an output end of the first diesel generator set 114 is connected with the low voltage side of the station transformer of the converting station. The first diesel generator set 114 is configured for supplying power after the first power storage module 111 is failed. The first diesel generator set 114 is connected to the low voltage side of the station transformer of the converting station for power supply. Connection and disconnection of the first diesel generator set 114 are both performed by controlling a first circuit breaker set 115 through the first main control panel 130. When the converting station energy storage device 110 cannot be used, the control system of the converting station will be unable to work normally. At the moment, the first diesel generator set 114 is introduced.

A process of introducing the first diesel generator set 114 is briefly described hereinafter: when the power generation field stops generating electricity and the bus voltage is less than the first set value, the converting station energy storage device 110 will be continuously detected, if the converting station energy storage device 110 is normal, the converting station energy storage device 110 is used to complete power supply, and if the converting station energy storage device is abnormal, the first diesel generator set 114 needs to be started to supply power. When the power generation field starts running and the bus voltage is less than the first set value, the first diesel generator set 114 may continue to supply power. However, at the moment, since the power generation field just starts running, it is easy to have a problem of insufficient power supply, so that the power generation field and the first diesel generator set may both supply power at the same time. When the power generation field runs and the bus voltage is greater than the first set value, the first diesel generator set 114 may be directly disconnected from a power grid, and only the bus is used to supply power in the control system of the converting station.

In some embodiments of the present invention, the power supply device above further includes a first output panel 140, and the first output panel 140 is configured for driving the first diesel generator set 114 to be connected to and disconnected from the power grid. The first diesel generator set 114 may be better controlled to work by the first output panel 140, which is safer and stronger in driving capacity than being directly controlled by the first main control panel 130.

In some embodiments of the present invention, the power supply device above further includes a man-machine interaction unit 150 connected with the first main control panel 130. Through a man-machine interaction system, working status of the whole converting station and the power generation field connected with the converting station may be viewed in real time, parameters such as the first set value and the second set value may be modified, thus improving an extensibility of the power supply device.

In some embodiments of the present invention, the power generation and energy storage device 210 includes a second power storage module 211 and a second charge-discharge converter 212. The second power storage module 211 is configured as a standby power supply for supplying power to the control system of the power generation device in case of power cut or failure of the power generation device. The second charge-discharge converter 212 has an input end connected with an output end of the second power storage module 211, and an output end configured for connecting a low voltage side of an output transformer of the power generation device or a bus of a wind power converter of the power generation device. When the second charge-discharge converter 212 is connected with the wind power converter of the power generation device, a direct current bus in the middle of the second charge-discharge converter 212 is usually directly connected with a direct current bus of the wind power converter. The second power storage module 211 may provide a stable power supply to ensure that the control system of the power generation device can be powered stably. However, under normal conditions, the second power storage module 211 cannot be directly connected to an alternating current. At the moment, the second charge-discharge converter 212 is required for switching to implement alternating and direct current conversion, rectification, filtering, and other operations. Finally, the second power storage module can be connected to the low voltage side of the output transformer of the power generation device, and then supplied to the control system of the whole power generation device.

In some embodiments of the present invention, one or more of a storage battery, a flywheel, a super capacitor, a fuel battery and an all-vanadium redox-flow battery is employed as the second power storage module 211. Under normal conditions, only one of the storage battery, the flywheel, the super capacitor, the fuel battery and the all-vanadium redox-flow battery needs to be employed, but sometimes, in order to improve a stability or meet some special requirements, more of the storage battery, the flywheel, the super capacitor, the fuel battery and the all-vanadium redox-flow battery kinds may be combined.

In some embodiments of the present invention, the power generation and energy storage device 210 further includes a boosting transformer 213, an input end of the boosting transformer 213 is connected with the output end of the second charge-discharge converter 212, and the output end is connected with the low voltage side of the output transformer of the power generation device. Under some conditions, the low voltage side of the output transformer of the power generation device cannot be directly wired, and at the moment, a voltage can be boosted through the boosting transformer 213 and connected to a high voltage side of the output transformer of the power generation device to complete power supply.

In some embodiments of the present invention, the power generation and energy storage device 210 further includes a second diesel generator set 213, and an output end of the second diesel generator set 214 is connected with the low voltage side of the output transformer of the power generation device. The second diesel generator set 214 is configured for supplying power after the second power storage module 211 is failed. The second diesel generator set 214 is connected to the low voltage side of the output transformer of the power generation device for power supply. Connection and disconnection of the second diesel generator set 214 are both performed by controlling a second circuit breaker set 215 through the second main control panel 230. When the power generation and energy storage device 210 cannot be used, the control system of the power generation device will be unable to perform black start. At the moment, the second diesel generator set 214 needs to be introduced.

A process of introducing the second diesel generator set 214 is briefly described hereinafter: when the power generation device is subject to power loss, the power generation and energy storage device 210 will be continuously detected, if the power generation and energy storage device 210 is normal, the power generation and energy storage device 210 is used to supply power to the control system of the power generation device, and if the power generation and energy storage device 210 is abnormal, the second diesel generator set 214 needs to be started to supply power. When the power generation device is detected to be not in the maintenance status, the power generation device starts to perform black start. When an output power after black start is less than the second set value, since the power generation device just starts running and is easy to have a problem of insufficient power supply, the power generation and energy storage device 210 and the power generation device may be used to supply power at the same time. When the power generation device runs and the output power is greater than the second set value, the second diesel generator set 214 may be directly disconnected from the power grid, and only the bus is used to supply power in the control system of the power generation device.

In some embodiments of the present invention, the power supply device above further includes a second output panel 240, and the second output panel 240 is configured for driving the second diesel generator set 214 to be connected to and disconnected from the power grid. The second diesel generator set may be better controlled to work by the second output panel 240, which is safer and stronger in driving capacity than being directly controlled by the second main control panel 230.

A power transmission system according to an embodiment in a second aspect of the present invention includes a power generation field, a converting station and an onshore converting platform which are connected in sequence, and the power supply device above which is respectively connected with the converting station and the power generation field.

For the offshore flexible power transmission system according to the embodiment of the present invention, the converting station and the power generation field can implement black start without the external auxiliary power supply by adding the power supply device above, thus solving a problem of incapability of self-starting when the external auxiliary power supply cannot be connected in remote areas. Meanwhile, the converting station and the power generation field can be controlled in case of power loss of the power generation field by adding the above power supply device, without losing communication with the onshore converting platform.

In the description of the present invention, the descriptions of the reference terms "one embodiment", "some embodiments", "schematic embodiments", "examples", "specific examples", or "some examples" refer to that the specific features, structures, materials, or characteristics described in combination with the embodiment or example are included in at least one embodiment or example of the present invention. In the specification, the schematic representation of the above terms does not necessarily mean the same embodiment or example. Moreover, the specific features, structures, materials or characteristics described may be combined in any one or more embodiments or examples in a suitable manner.

Although the embodiments of the present invention are described in detail with reference to the accompanying drawings above, the present invention is not limited to the above embodiments. Those of ordinary skills in the art may understand that: various changes, modifications, substitutions and variations may be made to these embodiments without departing from the principle and purpose of the present invention, and the scope of the present invention is defined by the claims and their equivalents.

## Claims

1. A power supply device of a power transmission system, comprising:
a converting station energy storage device (110) arranged in a converting station, and configured for supplying power to a control system of the converting station in case of power cut or failure of a power generation field;
a first data collection module (120) configured for collecting data of a bus voltage and a running status of the converting station energy storage device (110);
a first main control panel (130) respectively connected with the converting station energy storage device (110) and the first data collection module (120), and configured for receiving the data collected by the first data collection module (120) and controlling start and stop of the converting station energy storage device (110);
a power generation and energy storage device (210) arranged in the power generation field, and configured for supplying power to a control system of a power generation device in case of power cut or failure of the power generation device;
a second data collection module (220) configured for collecting data of a working status, a maintenance status and an output power of the power generation device; and
a second main control panel (230) respectively connected with the power generation and energy storage device (210) and the second data collection module (220), and configured for receiving the data collected by the second data collection module (220) and controlling start and stop of the power generation and energy storage device (210).

2. The power supply device of claim 1, wherein the converting station energy storage device (110) comprises:
a first power storage module (111) configured as a standby power supply for supplying power to the control system of the converting station; and
a first charge-discharge converter (112) with an input end connected with an output end of the first power storage module (111), and an output end configured for connecting a low voltage side of a station transformer of the converting station.

3. The power supply device of claim 2, wherein one or more of a storage battery, a flywheel, a super capacitor, a fuel battery and an all-vanadium redox-flow battery is employed as the first power storage module (111).

4. The power supply device of claim 2, wherein the converting station energy storage device (110) further comprises a first diesel generator set (114), and an output end of the first diesel generator set (114) is connected with the low voltage side of the station transformer of the converting station.

5. The power supply device of claim 1, further comprising a photovoltaic power generator set (113), wherein an output end of the photovoltaic power generator set (113) is connected with the converting station energy storage device (110).

6. The power supply device of claim 1, wherein the power generation and energy storage device (210) comprises:
a second power storage module (211) configured as a standby power supply for supplying power to the control system of the power generation device in case of power cut or failure of the power generation device; and
a second charge-discharge converter (212) with an input end connected with an output end of the second power storage module (211), and an output end configured for connecting a low voltage side of an output transformer of the power generation device or a bus of a wind power converter of the power generation device.

7. The power supply device of claim 6, wherein one or more of a storage battery, a flywheel, a super capacitor, a fuel battery and an all-vanadium redox-flow battery is employed as the second power storage module (211).

8. The power supply device of claim 6, wherein the power generation and energy storage device (210) further comprises a boosting transformer (213), an input end of the boosting transformer (213) is connected with the output end of the second charge-discharge converter (212), and the output end is connected with a high voltage side of an output transformer of the power generation device.

9. The power supply device of claim 6, wherein the power generation and energy storage device (210) further comprises a second diesel generator set (214), and an output end of the second diesel generator set (214) is connected with a low voltage side of an output transformer of the power generation device.

10. A power transmission system, comprising a power generation field, a converting station and an onshore converting platform which are connected in sequence, and the power supply device of any one of claims 1 to 9 which is respectively connected with the converting station and the power generation field.
